# EUROPEAN PATENT APPLICATION

(11) **EP 4 424 506 A1**
(43) Date of publication of application: **04.09.2024**
(21) Application number: 22887426.9
(22) Date of filing: 13.10.2022
(51) Int. Cl.: B32B 7/023, B32B 7/025, B32B 17/10, G02B 5/30

(54) **OPTICAL LAMINATE AND MANUFACTURING METHOD THEREFOR, SMART WINDOW COMPRISING SAME, AND DOOR AND WINDOW FOR AUTOMOBILE AND BUILDING EMPLOYING SAME**

(30) Priority: 29.10.2021 KR 20210147215
(71) Applicant: Dongwoo Fine-Chem Co., Ltd., Iksan-si, Jeollabuk-do 54631 (KR)
(72) Inventor: KIM, Dong-Hwi, Sejong 30100 (KR); AHN, Hong-Jun, Seoul 06593 (KR); OH, Pyoung-Yun, Pyeongtaek-si, Gyeonggi-do 17809 (KR)
(74) Representative: Betten & Resch
(86) International application number: PCT/KR2022/015487
(87) International publication number: WO 2023/075223

(57) **Abstract**

The present invention relates to a transmittance-variable optical laminate and a manufacturing method therefor, a smart window comprising same, and a door and window for an automobile and building employing same, the optical laminate comprising: a first polarizing plate having a first connection part; a first transparent conductive layer formed on one surface of the first polarizing plate; a second polarizing plate facing the first polarizing plate and having a second connection part; a second transparent conductive layer formed on one surface of the second polarizing plate; and a liquid crystal layer provided between the first transparent conductive layer and the second transparent conductive layer, wherein at least one transparent conductive layer from among the first transparent conductive layer and the second transparent conductive layer is formed to come into direct contact with any one polarizing plate from among the first polarizing plate and the second polarizing plate, and the first connection part and the second connection part protrude in the same outward direction.

## Description

### Technical Field

The present disclosure relates to a variable transmittance optical stack and a manufacturing method for the same, a smart window including the same, and a door and window for an automobile and a building to which the same is applied.

### Background Art

In general, there are many cases in which an external light blocking coating is applied to a window of a means of transportation such as an automobile. However, the transmittance of a conventional window of a means of transportation is fixed, and the transmittance of the external light blocking coating is also fixed. Therefore, the entire transmittance of the conventional window of the means of transportation is fixed, thereby causing an accident. For example, when the entire transmittance is preset low, there is no problem during day when ambient light is abundant. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a variable transmittance optical stack capable of changing the transmittance of light when a voltage is applied has been developed.

The variable transmittance optical stack is operated by changing the transmittance by controlling liquid crystals according to voltage application. The variable transmittance optical stack developed so far is manufactured by forming a conductive layer for controlling of liquid crystals on a separate or additional substrate, and then coupling the conductive layer to other elements such as a polarizing plate, etc.

For example, Japanese Patent Publication Application No. 2018-010035 discloses the variable transmittance optical stack including a transparent electrode layer formed on a polycarbonate (PC) substrate having a predetermined thickness.

However, when a separate or additional substrate is included to form the conductive layer as described above, as a manufacturing process becomes complicated, there are problems in that manufacturing costs increase, the thickness of the stack increases, and the transmittance is changed due to occurrence of phase difference.

Furthermore, when protrusions of the conductive layer connected to a wiring part for operation of the optical stack are formed on both side portions of the optical stack, there is a problem in that the length of the wiring part increases and a light control region is reduced.

Therefore, without a separate or additional substrate for formation of a conductive layer, there is a need to develop a variable transmittance optical stack of which a manufacturing process is simplified, the thickness is reduced, a light control region is not reduced, and storing and carrying is easily performed.

### Disclosure

### Technical Problem

The present disclosure is intended to provide a variable transmittance optical stack capable of reducing the length of a wiring part for operation of the optical stack, as a protrusion of a conductive layer connected to the wiring part is formed to protrude in the same outward direction.

Another objective of the present disclosure is to provide a variable transmittance optical stack capable of preventing reduction of a light control region, as a protrusion of a conductive layer connected to a wiring part for operation of the optical stack is formed to protrude in the same outward direction.

Yet another objective of the present disclosure is to provide a variable transmittance optical stack having a simplified manufacturing process by not including a separate or additional substrate for formation of a conductive layer.

Still another objective of the present disclosure is to provide a variable transmittance optical stack having a significantly reduced thickness by not including a separate or additional substrate for formation of a conductive layer.

Still another objective of the present disclosure is to provide a variable transmittance optical stack having the improved transmittance in a light transmissive mode by not including a separate or additional substrate for formation of a conductive layer.

Still another objective of the present disclosure is to provide a smart window including the variable transmittance optical stack, and a window and door for an automobile or a building to which the same is applied.

However, the problem to be solved by the present disclosure is not limited to the problems mentioned above, and other problems not mentioned will be clearly understood by those skilled in the art from the description below.

### Technical Solution

The present disclosure relates to a variable transmittance optical stack, the variable transmittance optical stack including: a first polarizing plate including a first connection part; a first transparent conductive layer formed on one surface of the first polarizing plate; a second polarizing plate opposing the first polarizing plate, and including a second connection part; a second transparent conductive layer formed on one surface of the second polarizing plate; and a liquid crystal layer provided between the first transparent conductive layer and the second transparent conductive layer, wherein at least one transparent conductive layer from among the first transparent conductive layer and the second transparent conductive layer may be formed to come into direct contact with one first polarizing plate from among the first polarizing plate and the second polarizing plate, and the first connection part and the second connection part may protrude in the same outward direction.

In a first aspect of the present disclosure, at least one transparent conductive layer from among the first transparent conductive layer and the second transparent conductive layer may have the same form as one polarizing plate from among the first polarizing plate and the second polarizing plate.

In a second aspect of the present disclosure, the first connection part and the second connection part may not be overlapped with each other in a planar direction.

In a third aspect of the present disclosure, at least one connection part from among the first connection part and the second connection part may have a length in an in-plane direction ranging from 10 to 50mm.

In a fourth aspect of the present disclosure, the sum of widths of the first connection part and the second connection part may be less than a width of an end in a second direction opposing the outward direction where the first connection part and the second connection part are provided.

In a fifth aspect of the present disclosure, the sum of widths of the first connection part and the second connection part may be 90% or less of the width of the end in the second direction opposing the outward direction where the first connection part and the second connection part are provided.

In a sixth aspect of the present disclosure, at least one transparent conductive layer from among the first transparent conductive layer and the second transparent conductive layer may be formed to come into direct contact with one polarizing plate from among the first polarizing plate and the second polarizing plate without a separate or additional substrate therebetween.

In a seventh aspect of the present disclosure, at least one transparent conductive layer from among the first transparent conductive layer and the second transparent conductive layer may be formed to come into direct contact with one polarizing plate from among the first polarizing plate and the second polarizing plate with a highly adhesive layer therebetween.

In an eighth aspect of the present disclosure, at least one polarizing plate from among the first polarizing plate and the second polarizing plate may include one or more types of functional layers selected from a group consisting of a protective layer, a retardation matching layer, and a refractive index-matching layer.

In a ninth aspect of the present disclosure, the first polarizing plate and the second polarizing plate may have a thickness ranging from 30µm to 200µm.

In a tenth aspect of the present disclosure, the liquid crystal layer may include one or more types selected from a group consisting of a ball spacer and a column spacer.

In an eleventh aspect of the present disclosure, the ball spacer may have a diameter ranging from 1 µm to 10µm.

In a twelfth aspect of the present disclosure, an occupancy area of the ball spacer in the liquid crystal layer may range from 0.01% to 10% of the area of the liquid crystal layer.

In a thirteenth aspect of the present disclosure, the variable transmittance optical stack may include one or more types selected from a group consisting of the alignment film, a pressure sensitive adhesive/adhesive layer, an UV absorption layer, and a hard coating layer.

Furthermore, the present disclosure relates to a manufacturing method for the variable transmittance optical stack.

In a fourteenth aspect of the present disclosure, the manufacturing method may include : forming the first transparent conductive layer on one surface of the first polarizing plate; forming the first connection part on one end of the first polarizing plate to manufacture a first stack; forming the second transparent conductive layer on one surface of the second polarizing plate; forming the second connection part on one end of the second polarizing plate to manufacture a second stack; forming the liquid crystal layer between the first stack and the second stack; and bonding the first stack and the second stack to each other such that the first connection part and the second connection part protrude in the same outward direction.

In a fifteenth aspect of the present disclosure, the first connection part may be formed by cutting out both of the first polarizing plate and the first transparent conductive layer formed on one surface of the first polarizing plate, and the second connection part may be formed by cutting out both of the second polarizing plate and the second transparent conductive layer formed on one surface of the second polarizing plate.

Furthermore, the present disclosure relates to a smart window including the variable transmittance optical stack.

Furthermore, the present disclosure relates to an automobile including the smart window applied to at least one from among a front window, a rear window, a side window, a sunroof window, and an inner partition thereof.

Furthermore, the present disclosure relates to a window and door for a building, the window and door including the smart window.

### Advantageous Effects

For the variable transmittance optical stack according to the present disclosure, the protrusion of the conductive layer connected to the wiring part is formed to protrude in the same outward direction, so that the length of the wiring part can be significantly reduced in comparison to the conventional optical stack.

Furthermore, for the variable transmittance optical stack according to the present disclosure, the protrusion of the conductive layer connected to the wiring part is formed to protrude in the same outward direction, so that the light control region of the variable transmittance optical stack can be further improved in comparison to the conventional optical stack.

Furthermore, for the variable transmittance optical stack according to the present disclosure, it is possible to omit the conventional process of forming a conductive layer on a substrate to form a conventional optical stack and bonding-coupling the stack to other members, so that the manufacturing process of the variable transmittance optical stack can be simplified in comparison to the conventional optical stack.

Furthermore, for the variable transmittance optical stack according to the present disclosure, the conductive layer is formed to come into direct contact with one surface of the polarizing plate and a separate or additional substrate for formation of a conductive layer is not included, so that the thickness of the variable transmittance optical stack can be significantly reduced in comparison to the conventional optical stack.

Furthermore, for the variable transmittance optical stack according to the present disclosure, the conductive layer is formed directly on one surface of the polarizing plate and a separate and additional substrate for formation of a conductive layer is not included, so that the transmittance in the light transmissive mode of the variable transmittance optical stack can be improved in comparison to the conventional optical stack.

### Description of Drawings

FIG. 1 is a view showing a stack structure of a variable transmittance optical stack according to an embodiment of the present disclosure.
FIGS. 2A and 2E are views each showing a stack structure of a polarizing plate according to one or multiple embodiments of the present disclosure.
FIGS. 3A and 3B are views each showing a form of the polarizing plate and a transparent conductive layer according to one or multiple embodiments of the present disclosure.
FIG. 4 is a view showing a width b1, b2, a length c, and a distance d of the optical stack.
FIGS. 5A and 5B are views showing a stack structure of the variable transmittance optical stack according to another embodiment of the present disclosure.
FIG. 6 is a flowchart showing a method for manufacturing the variable transmittance optical stack according to an embodiment of the present disclosure.

### Best Mode

The present disclosure relates to a variable transmittance optical stack, wherein a transparent conductive layer for controlling of liquid crystals is formed directly on one surface of a polarizing plate and a separate and additional substrate for formation of a conductive layer is not included, so that the thickness of the stack is reduced, the transmittance in a light transmissive mode is improved, a protrusion for connection of a wiring part is formed in the same outward direction of the optical stack to facilitate storing and carrying of the variable transmittance optical stack, and the length of the wiring part is reduced, and the light control region can be further improved.

More specifically, the present disclosure relates to a variable transmittance optical stack including: the first polarizing plate including a first connection part; a first transparent conductive layer formed on one surface of the first polarizing plate; a second polarizing plate opposing the first polarizing plate, and including a second connection part; a second transparent conductive layer formed on one surface of the second polarizing plate; and a liquid crystal layer provided between the first transparent conductive layer and the second transparent conductive layer, wherein at least one transparent conductive layer from among the first transparent conductive layer and the second transparent conductive layer is formed to come into direct contact with one polarizing plate from among the first polarizing plate and the second polarizing plate, and the first connection part and the second connection part protrude in the same outward direction.

Therefore, the variable transmittance optical stack of the present disclosure is particularly suitable for technical fields where transmissive properties of light can be changed in response to application of voltage and, for example, may be used for a smart window.

The smart window means an optical structure controlling the amount of light or heat passing through a window by changing transmissive properties of light according to application of an electrical signal. In other words, the smart window is provided to be changed into a transparent, opaque or translucent state by voltage, and is called variable transmittance glass, lighting control glass, or smart glass.

The smart window may be used as partitions for partitioning an internal space of an automobile and a building or for protecting privacy, or as skylights arranged in openings of buildings, and may be used as highway signs, noticeboards, scoreboards, clocks or advertising screens, and may be used to replace glass of a means of transportation, such as windows or sunroof windows of cars, buses, aircrafts, ships, or trains.

The variable transmittance optical stack of the present disclosure may also be used for the smart window of the various technical fields mentioned above, but since the conductive layer is directly formed in the polarizing plate, there is no need to include a separate or additional substrate for formation of the conductive layer and the thickness thereof is thin and is advantageous in the flexuosity, so the optical stack of the present disclosure may be used to be particularly suitable for a smart window of an automobile or a building. According to one or multiple embodiments, the smart window to which the variable transmittance optical stack of the present disclosure is applied may be used for front windows, rear windows, side windows, and sunroof windows of an automobile, or windows for a building, and the smart window may be used to not only an external light blocking use, but also an internal space partitioning use or a privacy protecting use such as an inner partition for an automobile or a building.

### Mode for Invention

Hereinbelow, embodiments of the present disclosure will be described in detail with reference to drawings. However, the following drawings accompanying this specification illustrate preferred embodiments of the present disclosure, and serve to further understand the technical idea of the present disclosure with the contents of the above-described invention. Therefore, the present disclosure should not be construed as being limited to materials described in the drawings.

Terms used in this specification are selected to describe embodiments and thus do not limit the present disclosure. In this specification, an element expressed in a singular form may be plural elements unless it is necessarily singular in the context. For example, "the polarizing plate" used in the specification may mean at least one polarizing plate from among the first polarizing plate and the second polarizing plate, and "the transparent conductive layer" may mean at least one transparent conductive layer from among the first transparent conductive layer and the second transparent conductive layer, and "the connection part" may mean at least one connection part from among the first connection part and the second connection part.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", "lower portion", "above", "upper surface", "upper portion" may be used to easily describe the correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" concerning another element may be placed "on" the another element. Accordingly, the exemplary term "below" may include both downward and upward directions. An element may be aligned in a different direction, and accordingly, the spatially relative terms may be interpreted according to alignment.

The "planar direction" used in this specification may be interpreted as a direction perpendicular to a polarizing plate and/or a transparent conductive layer, that is, a direction viewed from the user's view side.

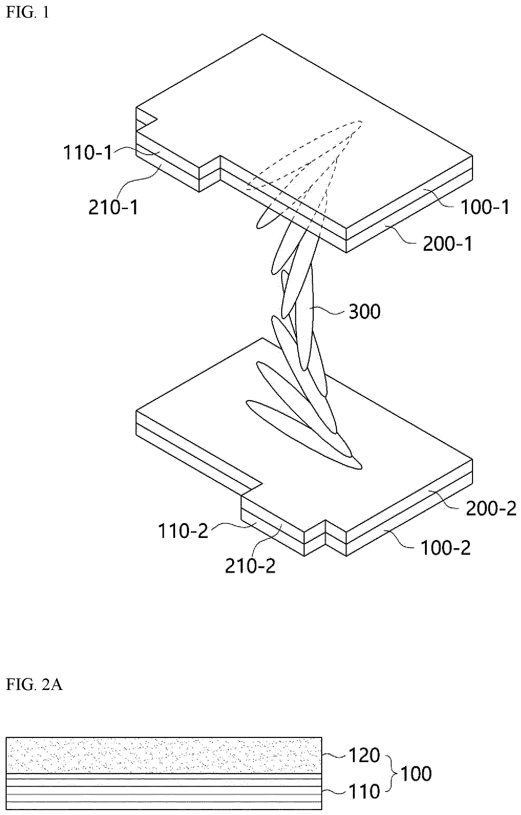

FIG. 1 is a view showing a stack structure of a variable transmittance optical stack according to an embodiment of the present disclosure.

Referring to FIG. 1, according to the embodiment of the present disclosure, the variable transmittance optical stack may include a first polarizing plate 100-1, a second polarizing plate 100-2, a first transparent conductive layer 200-1, a second transparent conductive layer 200-2, and a liquid crystal layer 300.

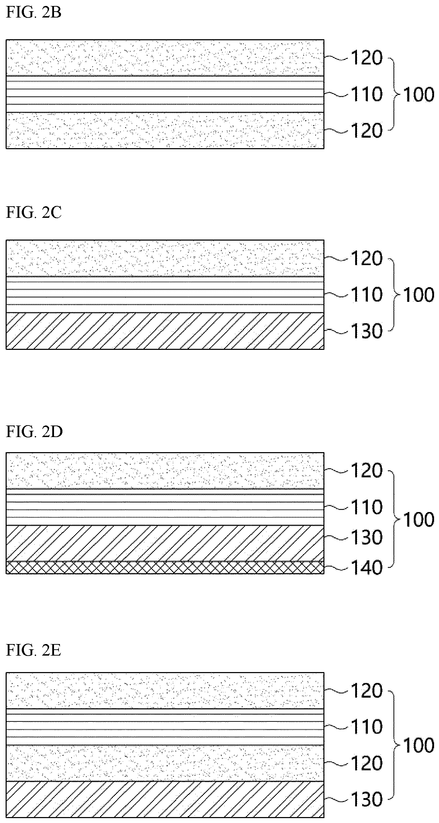

FIGS. 2A and 2E are views each showing a stack structure of a polarizing plate according to one or multiple embodiments of the present disclosure.

Referring to FIGS. 2A and 2E, the polarizing plate 100 may include a polarizer 110, and the polarizing plate 100 may include functional layers such as a protective layer 120, a retardation matching layer 130, a refractive index-matching layer 140, etc., on one or both surfaces of the polarizer 110. For example, the polarizing plate 100 may include: the polarizer 110 and the protective layer 120 stacked on one or both surfaces of the polarizer 110 (referring to FIGS. 2A and 2B); the polarizer 110, the protective layer 120 stacked on a first surface of the polarizer 110, and the retardation matching layer 130 stacked on a second surface opposing the first surface of the polarizer 110 (referring to FIG. 2C); the polarizer 110, the protective layer 120 stacked on the first surface of the polarizer 110, and the retardation matching layer 130 and the refractive index-matching layer 140 successively stacked on the second surface opposing the first surface of the polarizer 110 (referring to FIG. 2D); or the polarizer 110, the protective layer 120 stacked on the first surface of the polarizer 110, and the protective layer 120 and the retardation matching layer 130 successively stacked on the second surface opposing the first surface of the polarizer 110 (referring to FIG. 2E).

The polarizer 110 may use a polarizer currently developed or to be developed and, for example, a stretched polarizer or a coated polarizer may be used therefor.

According to an embodiment, the stretched polarizer may include a stretched polyvinyl alcohol (PVA) based resin. The PVA based resin may be PVA based resin obtained by saponifying polyvinyl acetate resin. As the polyvinyl acetate based resin, in addition to polyvinyl acetate that is homopolymer of vinyl acetate, vinyl acetate and a copolymer with other monomers that can be copolymerized with vinyl acetate. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA based resin includes a denatured resin and, for example, may be polyvinyl formal or polyvinyl acetal denatured into aldehyde.

According to an embodiment, the coated polarizer may be formed of a composition for liquid crystal coating, and, at this point, the composition for liquid crystal coating may contain reactive liquid crystal compound, and dichroic dye.

The reactive liquid crystal compound may mean a compound, for example, containing a mesogen frame, etc., and also containing one or more polymerizable functional groups. The reactive liquid crystal compound may be variously known by the name reactive mesogen (RM). The reactive liquid crystal compound may constitute a cured film with a polymer network formed while being polymerized by light or heat and maintaining a liquid crystal arrangement.

The reactive liquid crystal compound may be a mono-functional liquid crystal compound or a multi-functional liquid crystal compound. The mono-functional liquid crystal compound is a coumpound having 1 polymerizable functional group, and the multi-functional liquid crystal compound may mean a compound having two or more polymerizable functional groups.

The dichroic dye is a substance contained in the composition for liquid crystal coating to provide the polarization characteristic, and has a property in which absorbance in a direction of long axis of molecule and absorbance in a direction of short axis are different. The dichroic dye may be a dichroic dye currently developed or to be developed, and may include one or more types selected from a group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The composition for liquid crystal coating may include a solvent capable of dissolving the reactive liquid crystal compound and the dichroic dye. For example, propylene glycol monomethyl ether acetate (PGMEA), methyl ethyl ketone (MEK), xylene, chloroform, and the like may be used. Furthermore, the composition for liquid crystal coating may contain levelling agents, polymerization initiators, etc. within a range that does not impair the polarization characteristic of a coating film.

The protective layer 120 may be provided to preserve the characteristics of polarization of the polarizer 110 from a post-processing and external environment, and may be formed into a protective film.

As shown in FIGS. 2A and 2B, the protective layer 120 may be formed to come into direct contact with one or both surfaces of the polarizer 110, but is not limited thereto. For example, the protective layer may be used as a double-layer structure in which one or more protective layers are successively stacked and may be formed in direct contact with another functional layer.

According to one or multiple embodiments, the protective layer 120 may include one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

The retardation matching layer 130 is provided to complement optical properties of the optical stack, and may be implemented in a retardation film, and may be a retardation film currently developed or to be developed. For example, a quarter-wave plate (1/4 wave plate), a half-wave late (1/2 wave plate), etc. may be used to delay the phase of light, and may be used alone or in combination.

As shown in FIGS. 2C and 2D, the retardation matching layer 130 may be formed to come into direct contact with one surface of the polarizer 110, but is not limited thereto. For example, as shown in FIG. 2E, the retardation matching layer 130 is formed on one surface of the protective layer 120, so the polarizer 110, the protective layer 120, and the retardation matching layer 130 may be successively stacked.

The retardation matching layer 130 may be a polymer stretched film or a liquid crystal polymerized film, the polymer stretched film being formed by stretching a polymer film that can provide optical anisotropy by stretching in an appropriate manner.

According to the embodiment, the polymer stretched film may use a polymer layer including: polyolefin such as polyethylene (PE) or polypropylene (PP), etc. ; cyclo olefin polymer (COP) such as, polynorbornene, etc.; polyester such as polyvinyl chloride (PVC), polyacrylonitrile (PAN), polysulfone (PSU), acryl resin, polycarbonate (PC), polyethylene terephthalate (PET), etc.; and/or cellulose ester polymer such as polyacrylate, polyvinyl alcohol (PVA), triacetyl cellulose (TAC), etc., or a copolymer of two or more monomers among monomers that can form the polymers.

An obtaining method of the polymer stretched film is not particularly limited and, for example, the polymer stretched film may be obtained by forming the polymer material into a film form and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using common solvent, for example, solvent such as chloroform, 2 methylene chloride, and then solidified in a cast dry manner, and accordingly the non-stretched film may be cast-molded.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD, and furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain reactive liquid crystal compound in a polymerized state. The description of the reactive liquid crystal compound of the above-mentioned coated polarizer may be equally applied to the reactive liquid crystal compound.

According to one or multiple embodiments, the retardation matching layer 130 may have the thickness ranging from 10µm to100µm in the case of the polymer stretched film, and may have the thickness ranging from 0.1µm to 5µm in the case of the liquid crystal polymerized film.

The refractive index-matching layer 140 is provided to compensate for the refractive index difference of the optical stack by the transparent conductive layer 200, and may serve to improve the visible characteristic by reducing the difference of the refractive index. Furthermore, the refractive index-matching layer 140 may be provided to correct a color based on the transparent conductive layer 200. In this case, the refractive index-matching layer 140 may be located between the polarizing plate 100 and the transparent conductive layer 200. Meanwhile, when the transparent conductive layer has a pattern, the refractive index-matching layer 140 may correct the difference in transmittance between a region with the pattern and a region without the pattern.

Specifically, the transparent conductive layer 200 is stacked close to other members having a refractive index different therefrom (for example, the polarizing plate 110, etc.), and due to the difference of the refractive index between the transparent conductive layer 200 and another layer close thereto, the difference of optical transmittance may be caused. Specifically, when a pattern is formed on the transparent conductive layer 200, there may be a problem in that the pattern region and the non-pattern region are visually distinguished from each other. Therefore, the refractive index-matching layer 140 is included to compensate for a refractive index, thereby reducing the difference with the optical transmittance of the optical stack. Specifically, when a pattern is formed on the transparent conductive layer, the pattern region and the non-pattern region should be provided so as not to be visually distinguished.

According to the embodiment, the refractive index of the refractive index-matching layer 140 may be appropriately selected according to a material of another adjacent member, preferably, may range from 1.4 to 2.6, more preferably from 1.4 to 2.4. In this case, it is possible to prevent optical loss due to a sharp difference in the refractive index between another member such as the polarizer 110 and the transparent conductive layer 200.

The refractive index-matching layer 140 is not particularly limited as long as it can prevent the sharply refractive difference between other members such as the polarizer 110 and the transparent conductive layer 200, and a compound used in the formation of conventional or later developed refractive index-matching layers can be used. For example, the refractive index-matching layer 150 may be formed from refractive index-matching layer formation composition including polymerizable isocyanate compound.

According to the embodiment, the polarizing plate 100 may include other functional layers to assist or strengthen the characteristics of the polarizer in addition to the above-mentioned functional layers and, for example, may include an overcoat layer, etc. to further improve the mechanical durability.

According to one or multiple embodiments, the polarizing plate 100 may have a thickness ranging from 30 to 200 µm, preferably a thickness ranging from 30 to 170 µm, more preferably a thickness ranging from 50 to 150 µm. In this case, while the polarizing plate 100 maintains the optical characteristic, the optical stack having a thin thickness can be manufactured.

The transparent conductive layer 200 is provided to control the liquid crystal layer 300, and may be formed to come into direct contact with the polarizing plate 100. For example, as shown in FIG. 1, the first transparent conductive layer 200-1 and the second transparent conductive layer 200-2 may be respectively formed to come into directly contact with the first polarizing plate 100-1 and the second polarizing plate 100-2.

Conventionally, an optical stack used to manufacture a smart window, etc. is manufactured by forming a conductive layer for controlling of liquid crystals on one surface of a separate or additional substrate and bonding-coupling a second surface of the substrate to a polarizing plate. However, the variable transmittance optical stack according to the present disclosure has the conductive layer directly formed on one surface of the polarizing plate without a separate or additional substrate for formation of the conductive layer. Therefore, the variable transmittance optical stack is characterized to improve the transmittance in a light transmissive mode and the curvature characteristic while reducing the entire thickness of the stack.

According to the embodiment, the transparent conductive layer 200 may be formed by being directly deposited on one surface of the polarizing plate 100. At this point, in order to improve the adhesion between the transparent conductive layer 200 and the polarizing plate 100, the transparent conductive layer 200 may be formed by performing pre-processing such as a corona processing or a plasma processing on one surface of the polarizing plate 100, and then coming into direct contact with the surface of the polarizing plate 100 to which the pre-processing is performed. The pre-processing is not limited to the corona processing or the plasma processing, and may be a pre-processing currently developed or to be developed without harming the purpose of the present disclosure.

According to another embodiment of the present disclosure, in order to improve the adhesion between the transparent conductive layer 200 and the polarizing plate 100, the transparent conductive layer 200 may be formed to come into direct contact with the polarizing plate with a highly adhesive layer (not shown) located therebetween, the highly adhesive layer being provided on one surface of the polarizing plate 100.

The transparent conductive layer 200 preferably has the transmittance 50% or more with respect to visible light, and for example, may include one or more types selected from a group consisting of transparent conductive oxide, metal, a carbonaceous material, conductive polymer, conductive ink, and nanowires, more specifically, may include transparent conductive oxide.

According to one or multiple embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, the metal may include argentum - palladium - cuprum (APC) alloy or cuprum - calcium (CuCa) alloy. The carbonaceous material may include one or more types selected from a group consisting of carbon nanotube (CNT), graphene, etc., and the conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 200 may be formed by combining these substances in a structure of two or more layers. For example, in order to reduce the reflectance of incident light and increase the transmittance, the transparent conductive layer 200 may be formed in a structure of two layers including a metal layer and a transparent conductive oxide.

The transparent conductive layer 200 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as chemical vapor deposition (CVD), physical vapor deposition (PVD), plasma enhanced chemical vapor deposition (PECVD), etc.

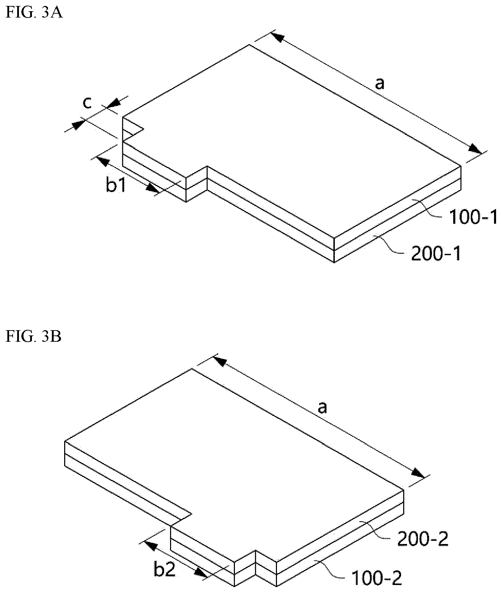

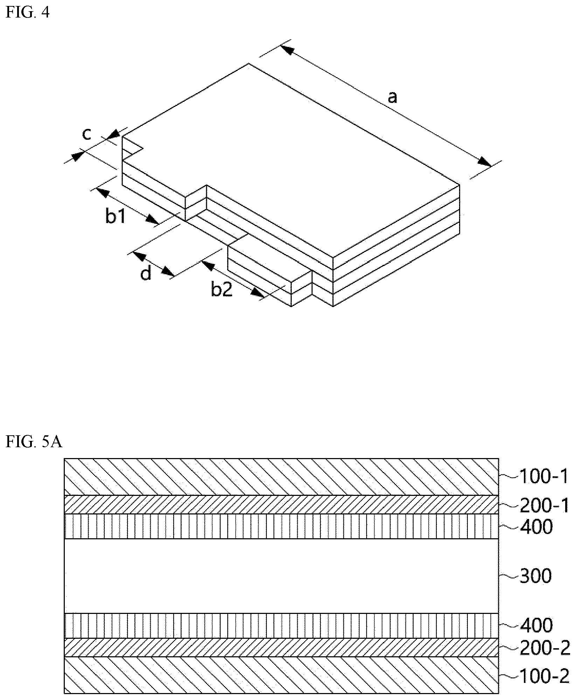

FIGS. 3A and 3B are views each showing a form of the polarizing plate and the transparent conductive layer according to one or multiple embodiments of the present disclosure. FIG. 4 is a view showing a width b1, b2, a length c, and a distance d of the optical stack.

Referring to FIGS. 1, 3, and 4, the first polarizing plate 100-1 may include a first connection part 110-1, and the second polarizing plate 100-2 may include a second connection part 110-2.

Meanwhile, as described above, the transparent conductive layer 200 may be formed to come into direct contact with the polarizing plate 100. Accordingly, the transparent conductive layer 200 may have substantially the same form as the polarizing plate 100.

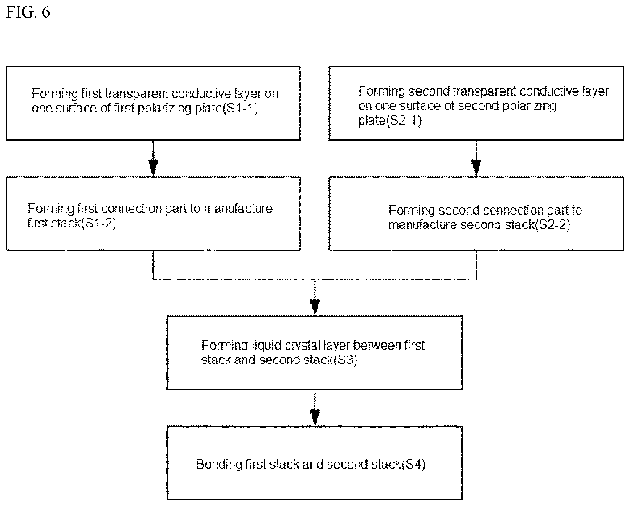

Specifically, referring to FIG. 6, the variable transmittance optical stack according to the embodiment of the present disclosure may be manufactured by performing: forming the first transparent conductive layer on one surface of the first polarizing plate, S1-1; forming the first connection part on one end of the first polarizing plate to manufacture a first stack, S1-2; forming the second transparent conductive layer on one surface of the second polarizing plate, S2-1; forming the second connection part on one end of the second polarizing plate to manufacture a second stack, S2-2; forming the liquid crystal layer between the first stack and the second stack, S3; and bonding the first stack and the second stack for the first connection part and the second connection part to protrude in the same outward direction, S4. At this point, the transparent conductive layer is formed to come into direct contact with one surface of the polarizing plate while having a thin film form of a nanometer (nm) to micrometer (µm) unit, so that each of the first stack and the second stack may be manufactured by cutting out both of the polarizing plate and the transparent conductive layer formed on one surface of the polarizing plate. For example, the first connection part may be formed by cutting out both of the first polarizing plate and the first transparent conductive layer formed on one surface of the first polarizing plate, and the second connection part may be formed by cutting out both of the second polarizing plate and the second transparent conductive layer formed on one surface of the second polarizing plate. Therefore, the first transparent conductive layer 200-1 may include a first protrusion 210-1 having substantially the same form as the first connection part 110-1, and the second transparent conductive layer 200-2 may include a second protrusion 210-2 having substantially the same form as the second connection part 110-2.

Meanwhile, according to another embodiment of the present disclosure, the first stack and the second stack may be manufactured by performing forming the alignment film on an upper surface of the transparent conductive layer, between the forming of the transparent conductive layer on one surface of the polarizing plate and the forming of the connection part on one end of the polarizing plate. In this case, each of the first stack and the second stack may be manufactured by cutting out both of the polarizing plates, the transparent conductive layer, and the alignment film. At this point, the transparent conductive layer and the alignment film may include substantially the same shaped region as the connection part of the polarizing plate.

As shown in FIGS. 1, 3, and 4, the connection part 110 may have a rectangular form, but is not limited thereto, and may have other forms appropriately selected within a range that does not damage the purpose of the present disclosure. For example, the connection part may have a polygonal form such as a square, a trapezoid, etc., and may have a curved portion.

The first connection part 110-1 and the second connection part 110-2 may respectively protrude outwards from the optical stack, and may protrude in the same direction. As shown in FIGS. 1 and 4, the case in which first connection part 110-1 and the second connection part 110-2 protrude in the same outward direction may mean that the first connection part 110-1 and the second connection part 110-2 are arranged to be provided on one side surface of the optical stack and bonded to each other. As described above, when the first connection part 110-1 and the second connection part 110-2 protrude from the optical stack in the same outward direction, there is the advantage in that storage and carrying of products are easily performed in comparison to when the first and second connection parts protrude outwards in different directions, for example, respectively protrude outwards from the opposite sides of the optical stack, and there is the advantage in that it is possible to reduce a length of a wiring part electrically connected to both of the first protrusion 210-1 and the second protrusion 210-2 that have substantially the same form as the first connection part 110-1 and the second connection part 110-2.

According to the embodiment, the first connection part 110-1 and the second connection part 110-2 may be provided not to be overlapped with each other in the planar direction.

Specifically, when the first connection part and the second connection part protruding in the same outward direction are overlapped with each other in the planar direction, as the thickness of the optical stack is reduced, electrical short between the first protrusion and the second protrusion having substantially the same form as the first connection part and the second connection part may occur, and operational characteristics of the optical stack may be defective.

Therefore, for the optical stack according to the embodiment of the present disclosure, the first connection part 110-1 and the second connection part 110-2 may preferably formed with a predetermined distance d. The distance d is not particularly limited, and may be appropriately preset according to the user's need. As a specific example, as described above, in order to prevent occurrence of electrical short between the first protrusion 210-1 and the second protrusion 210-2, the first protrusion 210-1 and the second protrusion 210-2 are preferably formed to be electrically spaced from each other and, for example, may be formed with a distance of 1mm or more, 3mm or more, 5mm or more, or 10mm or more.

Meanwhile, when the connection part has a form other than the rectangular form as shown in FIGS. 1, 3, and 4, the distance may mean a distance between points closest to the first connection part and the second connection part in aspect of prevention of electrical short.

Furthermore, for the optical stack according to the embodiment of the present disclosure, the sum of the width b1 of the first connection part 110-1 and the width b2 of the second connection part 110-2 may be less than a width a of a second directional end opposing the outward direction where the first connection part 110-1 and the second connection part 110-2 are provided, preferably be 90% or less of the width a of the second directional end, more preferably range from 5% to 80%. In this case, as described above, it is advantageous to secure a predetermined distance that is to prevent occurrence of electrical short between the first protrusion 210-1 and the second protrusion 210-2, and to facilitate electrical connection between the wiring part and the protrusions.

Meanwhile, when the connection part has a form other than the rectangular form as shown in FIGS. 1, 3, and 4, the width may mean a distance between positions that are maximally spaced from each other within a region in the connection part in aspect of prevention of occurrence of electrical short. For example, when the connection part has a regular semicircular form, the width may mean a diameter of a regular semicircle.

According to the embodiment, the first connection part 110-1 and the second connection part 110-2 may have a length c in an in-plane direction ranging from 10 to 50mm. In this case, there are the advantages of facilitating storage and carrying of the optical stack are easily performed and electrical connection between the first protrusion 210-1 and the second protrusion 210-2 and the wiring part. Furthermore, the first connection part 110-1 and the second connection part 110-2 respectively have difference lengths c in the in-plane direction. In this case, there is the advantage in that the connection part can be used as an indicator of a vertical location to facilitate division of cathode/anode or preset an optical path.

The liquid crystal layer 300 may adjust the transmittance of light incident in one or multiple directions in response to electric fields to change an operating mode of the optical stack.

The liquid crystal layer 300 may include liquid crystal compounds and, for example, may be located in a space defined by a sealant layer (not shown) and a spacer (not shown) provided between the first polarizing plate 100-1 and the second polarizing plate 100-2, in an optical control region.

The liquid crystal compounds are controlled in response to electric fields and are not particularly limited as long as it can control optical transmittance, and the liquid crystal compounds currently developed or to be developed may be used and, for example, the description of reactive liquid crystal compound of the above-mentioned coated polarizer may be equally applied thereto.

A liquid crystal controlling method of the liquid crystal layer 300 is not particularly limited. For example, as shown in FIG. 1, the liquid crystal layer 300 may be controlled by a twisted nematic (TN) mode, or may use a super twisted nematic (STN) mode, a vertical alignment (VA) mode, etc. According to a liquid crystal controlling method of the liquid crystal layer 300, a polarizer absorption axis of the first polarizing plate 100-1 and a polarizer absorption axis of the second polarizing plate 100-2 may be equal to each other, or may be arranged at a predetermined angle.

The sealant may include curable resins as base resins. As the base resins, UV curable resins or heat curable resins that are known to be usable for sealant in the art may be used. The ultraviolet curable resins may be polymers of UV curable monomers. The heat curable resins may be polymers of heat curable monomers.

As the base resins of the sealant, for example, acrylate based resins, epoxy based resins, urethane based resins, phenol based resins, or compounds of these resins may be used. According to the embodiment, the base resins may be acrylate based resins, and the acrylate based resins may be polymers of acrylic monomers. For example, the acrylic monomers may be multifunctional acrylate. According to another embodiment, the sealant may include monomer substances in addition to the base resins. For example, the monomer substances may be monofunctional acrylate. In the specification, the monofunctional acrylate may mean compounds having one acryl group, and the multifunctional acrylate may mean compounds having two or more acryl groups. The curable resins may be cured by UV irradiation and/or heating. The UV irradiation condition or heat condition may be performed appropriately within the scope that does not damage the objective of the present disclosure. In case of need, the sealant may include initiators, for example, optical initiators or heat initiators.

The sealant may be provided in a method commonly used in the art and, for example, may be formed by drawing a sealant at an outer portion of the liquid crystal layer (i.e., inactivate region) with a dispenser having a nozzle.

The spacer may include at least one spacer from among a ball spacer and a column spacer, and specifically, may preferably be a ball spacer. The ball spacer may include one or more ball spaces, and preferably has a diameter ranging from 1 to 10 µm. Furthermore, when viewed in a planar direction, an area where the ball spacer is occupied in the liquid crystal layer 300 preferably ranges from 0.01 to 10% of the area of the liquid crystal layer 300 in an aspect of improvement of user's visibility and transmittance in a light transmissive mode.

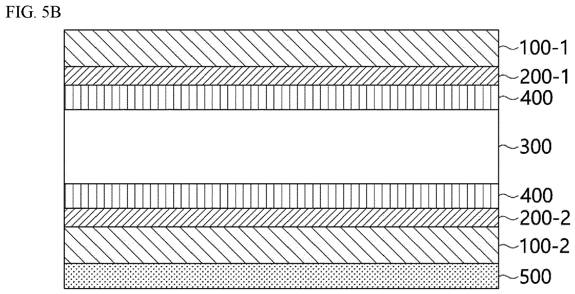

FIGS. 5A and 5B are views showing a stack structure of the variable transmittance optical stack according to another embodiment of the present disclosure.

According to the embodiment, the liquid crystal layer 300 may include an alignment film 400 as necessary (referring to FIG. 5). For example, the alignment film 400 may be formed on both surfaces of the liquid crystal layer 300 including the liquid crystal compounds.

The alignment film 400 is not particularly limited as long as it is provided to provide orientation to the liquid crystal compounds. For example, the alignment film 400 may be manufactured by coating and hardening an alignment film coating composition containing aligned polymers, a photopolymerization initiator, and a solvent. Although the aligned polymers are not particularly limited, the aligned polymers may use polyacrylate-based resin, polyamic resin, polyimide-based resin, polymer having cinnamate groups, etc. and may use polymers capable of expressing orientation, the polymers being currently developed or to be developed.

The variable transmittance optical stack of the present disclosure may include other members without affecting the purpose of the present disclosure and, for example, may include the pressure-sensitive adhesive/adhesive layer 500 (referring to 5B) and may include an UV absorption layer, a hard coating layer, etc.

The pressure sensitive adhesive/adhesive layer 500 may be formed using an adhesive or a pressure sensitive adhesive, and have appropriate pressure sensitive adhesion/adhesion to prevent peeling, bubbles, etc. from occurring when storing and carrying the optical stack, and preferably have transparency and thermal stability.

The adhesive may be an adhesive currently developed or to be developed, for example, may use photocurable adhesive.

The photocurable adhesive provides strong adhesion by being crosslinked and cured by receiving active energy rays such as ultraviolet rays (UV), electron beam (EB), etc., and may be composed of reactive oligomers, reactive monomers, photopolymerization initiators, and the like.

The reactive oligomers are important components that determine the properties of adhesive, and form polymer binding by photopolymerization to form a cured film. The available reactive oligomers may be polyester-based resins, polyether-based resins, polyurethane-based resins, epoxy-based resins, polyacryl-based resins, silicon-based resins, etc.

The reactive monomers may serve as crosslinker, diluent of the reactive oligomers described above, and affect adhesion characteristics. The available reactive monomers may be monofunctional monomers, multifunctional monomers, epoxy-based monomers, vinyl ethers, cyclic ethers, etc.

The photopolymerization initiators may absorb light energy to generate radicals or cations to initiate photopolymerization, and a proper kind of initiator may be selected and used depending on photopolymerization resin.

The pressure-sensitive adhesive may use a pressure-sensitive adhesive currently developed or to be developed. According to one or multiple embodiments, as the pressure-sensitive adhesive, acrylic-based pressure-sensitive adhesive, rubber-based pressure-sensitive adhesive, silicon-based pressure-sensitive adhesive, urethane-based pressure-sensitive adhesive, polyvinyl alcohol-based pressure-sensitive adhesive, polyvinyl pyrrolidone-based pressure sensitive adhesive, polyacrylamide-based pressure sensitive adhesive, cellulose-based pressure sensitive adhesive, vinylalky ether-based pressure sensitive adhesive and the like. The pressure-sensitive adhesive is not particularly limited as long as it has pressure-sensitive adhesion and viscoelasticity. For ease of acquisition, preferably, the pressure-sensitive adhesive may be acryl-based pressure-sensitive adhesive, for example, may include (meth) acrylate copolymers, crosslinkers, solvents, etc.

The crosslinkers may be crosslinkers currently developed or to be developed and, for example, polyisocyanate compounds, epoxy resins, melamine resins, urea resins, dialdehydes, methylol polymers, etc., and may preferably contain polyisocyanate compounds.

The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

The thickness of the pressure sensitive adhesive/adhesive layer 500 may be appropriately determined depending on a type of resins serving as the pressure sensitive adhesive/adhesive, the strength of the pressure sensitive adhesive/adhesive, the environment where the pressure sensitive adhesive/adhesive is used, and the like. According to the embodiment, in order to secure sufficient pressure sensitive adhesion/adhesion and reduce the thickness of the optical stack, the pressure sensitive adhesive/adhesive layer may have the thickness ranging from 0.01 to 50µm, preferably have the thickness ranging from 0.05 to 20µm, and more preferably have the thickness ranging from 0.1 to 10µm.

The UV absorption layer is not particularly limited as long as it is to prevent deterioration of the optical stack due to UV rays. For example, the UV absorption layer may use salicylic acid-based UV absorber (phenyl salicylate, p-tert-butylsalicylate, etc.), benzophenone-based UV absorber(2,4-dihydroxybenzophenone, 2,2'-dihydroxy-4,4'-dimethoxybenzophenone, etc.), benzotriazole-based UV absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate compounds, etc.), cyanoacrylate-based UV absorber(2'-ethylhexyl-2-cyano-3,3-diphenylacrylate, ethyl-2-cyano-3-(3',4'-methylene dioxyphenyl)-acrylate, etc.), triazine-based UV absorber, etc. The benzotriazole-based UV absorber or the triazine-based UV absorber that have high transparency and the excellent effect of preventing deterioration of the polarizing plate or the variable transmittance layer may be preferably used as the UV absorption layer, and the benzotriazole-based UV absorber having more appropriate spectral absorption spectroscopy absorption spectrum may be preferable. The benzotriazole-based UV absorber may be changed into "-bis" and, for example, may be 6,6'-methylene bis (2-(2H-benzo[d][1,2,3]triazole-2-yl)-4-(2,4,4-trimethylpentane-2-yl)phenol), 6,6'-methylene bis (2-(2H-benzo[d][1,2,3]triazole-2-yl)-4-(2-hydroxyethyl)phenol), etc.

The hard coating layer is not particularly limited as long as it is to protect members such as the polarizing plate, the variable transmittance layer, etc. from external physical and chemical shocks, and hard coating layers currently developed or to be developed may be used thereto.

According to the embodiment, the hard coating layer may be formed by applying compositions for formation of a hard coating layer on another member and then hardening the layer with light or heat. The compositions for formation of a hard coating layer are not particularly limited and, for example, may include photocurable compounds and a photoinitiator.

As the photocurable compounds and the photoinitiator, those commonly used in the art can be used without limitation, for example, the photocurable compounds may be photopolymerizable monomers, photopolymerizable oligomers, etc., for example, may be monofunctional and/or multifunctional (meth) acrylate, and the photoinitiator may be an oxime ester-based photoinitiator, etc.

Furthermore, the present disclosure includes a smart window including the variable transmittance optical stack, and includes an automobile in which the smart window is applied to at least one window from among a front window, a rear window, a side window, a sunroof window, and an inner partition thereof, and a window and door for a building including the smart window.

### Industrial Application

For the variable transmittance optical stack according to the present disclosure, the protrusion of the conductive layer connected to the wiring part is formed to protrude in the same outward direction, so that the length of the wiring part can be significantly reduced in comparison to the conventional optical stack.

## Claims

1. A variable transmittance optical stack comprising:
a first polarizing plate comprising a first connection part;
a first transparent conductive layer formed on one surface of the first polarizing plate;
a second polarizing plate opposing the first polarizing plate, and comprising a second connection part;
a second transparent conductive layer formed on one surface of the second polarizing plate; and
a liquid crystal layer provided between the first transparent conductive layer and the second transparent conductive layer,
wherein at least one transparent conductive layer from among the first transparent conductive layer and the second transparent conductive layer is formed to come into direct contact with one first polarizing plate from among the first polarizing plate and the second polarizing plate, and
the first connection part and the second connection part protrude in the same outward direction.

2. The variable transmittance optical stack of claim 1, wherein at least one transparent conductive layer from among the first transparent conductive layer and the second transparent conductive layer has the same form as one polarizing plate from among the first polarizing plate and the second polarizing plate.

3. The variable transmittance optical stack of claim 1, wherein the first connection part and the second connection part are not overlapped with each other in a planar direction.

4. The variable transmittance optical stack of claim 1, wherein at least one connection part from among the first connection part and the second connection part has a length in an in-plane direction ranging from 10 to 50mm.

5. The variable transmittance optical stack of claim 1, wherein the sum of widths of the first connection part and the second connection part is less than a width of an end in a second direction opposing the outward direction where the first connection part and the second connection part are provided.

6. The variable transmittance optical stack of claim 5, wherein the sum of widths of the first connection part and the second connection part is 90% or less of the width of the end in the second direction opposing the outward direction where the first connection part and the second connection part are provided.

7. The variable transmittance optical stack of claim 1, wherein at least one transparent conductive layer from among the first transparent conductive layer and the second transparent conductive layer is formed to come into direct contact with one polarizing plate from among the first polarizing plate and the second polarizing plate without an additional substrate therebetween.

8. The variable transmittance optical stack of claim 1, wherein at least one transparent conductive layer from among the first transparent conductive layer and the second transparent conductive layer is formed to come into direct contact with one polarizing plate from among the first polarizing plate and the second polarizing plate with a highly adhesive layer therebetween.

9. The variable transmittance optical stack of claim 1, wherein at least one polarizing plate from among the first polarizing plate and the second polarizing plate comprises one or more types of functional layers selected from a group consisting of a protective layer, a retardation matching layer, and a refractive index-matching layer.

10. The variable transmittance optical stack of claim 1, wherein the first polarizing plate and the second polarizing plate have a thickness ranging from 30µm to 200µm.

11. The variable transmittance optical stack of claim 1, wherein the liquid crystal layer comprises one or more types selected from a group consisting of a ball spacer and a column spacer.

12. The variable transmittance optical stack of claim 11, wherein the ball spacer has a diameter ranging from 1µm to 10µm.

13. The variable transmittance optical stack of claim 11, wherein an occupancy area of the ball spacer in the liquid crystal layer ranges from 0.01% to 10% of the area of the liquid crystal layer.

14. The variable transmittance optical stack of claim 1, wherein the variable transmittance optical stack comprises one or more types selected from a group consisting of the alignment film, a pressure sensitive adhesive/adhesive layer, an UV absorption layer, and a hard coating layer.

15. A manufacturing method for the variable transmittance optical stack of any one of claims 1 to 14.

16. The manufacturing method of claim 15 comprising:
forming the first transparent conductive layer on one surface of the first polarizing plate, S1-1;
forming the first connection part on one end of the first polarizing plate to manufacture a first stack, S1-2;
forming the second transparent conductive layer on one surface of the second polarizing plate, S2-1;
forming the second connection part on one end of the second polarizing plate to manufacture a second stack, S2-2;
forming the liquid crystal layer between the first stack and the second stack, S3; and
bonding the first stack and the second stack to each other such that the first connection part and the second connection part protrude in the same outward direction, S4.

17. The manufacturing method of claim 16, wherein the first connection part is formed by cutting out both of the first polarizing plate and the first transparent conductive layer formed on one surface of the first polarizing plate, and
the second connection part is formed by cutting out both of the second polarizing plate and the second transparent conductive layer formed on one surface of the second polarizing plate.

18. A smart window comprising the variable transmittance optical stack of any one of claims 1 to 14.

19. An automobile comprising the smart window of claim 18 applied to at least one from among a front window, a rear window, a side window, a sunroof window, and an inner partition.

20. A window and door for a building, the window and door comprising the smart window of claim 18.
